(19) Europäisches Patentamt European Patent Office Office européen des brevets

(11) **EP 4 651 070 A1**

(12) **EUROPEAN PATENT APPLICATION**

(43) Date of publication:
**19.11.2025 Bulletin 2025/47**

(21) Application number: **25167614.4**

(22) Date of filing: **01.04.2025**

(51) International Patent Classification (IPC):
***G06T 5/50*** *(2006.01)*

(52) Cooperative Patent Classification (CPC):
**G06V 10/60; G06T 3/40; G06T 5/50; G06T 5/70; G06T 7/20; G06V 10/56;** G06T 2207/10016; G06T 2207/10024; G06T 2207/20182; G06T 2207/20221

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **13.05.2024 US 202418661987**

(71) Applicant: **INTEL Corporation**
**Santa Clara, CA 95054 (US)**

(72) Inventors:
• **Zatzarinni, Rony**
**4642736 Tel Aviv (IL)**
• **Matichin, Hava**
**4906445 Petah Tikva (IL)**
• **Barber, Dor**
**4632821 Herzliya (IL)**

(74) Representative: **Samson & Partner Patentanwälte mbB**
**Widenmayerstraße 6**
**80538 München (DE)**

(54) **TEMPORAL NOISE REDUCTION ARCHITECTURE**

(57)     Systems and methods for improving a temporal noise reducer (TNR) architecture that improves TNR performance and IQ. Temporal noise reduction is a core feature of a video processing pipeline, where TNR can be used to decrease noise in video streams. TNRs generally includes two main steps: motion analysis and blending. Motion analysis includes identifying moving elements, and can include generating a motion map indicating regions of the input image that are static versus regions with movement. Blending includes blending the current input image frame with the previous temporally-denoised frame. An architecture is provided that separates the motion analysis from the blending step. In particular, the architecture includes a motion analysis block that operates on the raw image at the start of the pipeline, while the blending operation is completed on the processed image at the end of the image processing pipeline.

FIG. 1

## Description

### Technical Field

This disclosure relates generally to temporal noise reduction, and in particular to a temporal noise reduction architecture including downscaled image analysis.

### Background

Temporal noise reduction can be used to decrease noise in video streams. Noisy video image streams can appear jittery. While image portions with static objects can be averaged over time, averaging moving objects can result in a smearing and/or ghosting effect. Temporal noise reducers can incorporate a classifier that determines whether information can or cannot be averaged. In particular, a temporal noise reduction (TNR) classifier can determine which portions of video images can be averaged for temporal noise reduction, and which portions of video images cannot be averaged. TNR can include a motion analysis step to identify the moving elements and a blending step to blend the current input image with the previous temporally-denoised frame.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1 is a block diagram of an example image processing system, in accordance with various embodiments.
FIG. 2 is a block diagram of an example image processing system 200 in accordance with various embodiments.
FIG. 3 is a block diagram of an example motion analysis block 300, in accordance with various embodiments.
FIG. 4A shows a scene used for motion analysis, in accordance with various embodiments.
FIGS. 4B-4C show motion analysis maps, in accordance with various embodiments.
FIG. 5 is a flowchart showing a method 500 for temporal noise reduction of images, in accordance with various embodiments.
FIG. 6 is a block diagram of an example DNN system 600, in accordance with various embodiments.
FIG. 7 is a block diagram of an example computing device, in accordance with various embodiments.

### Detailed Description

#### *Overview*

Temporal noise reduction is a core feature of a video processing pipeline, where TNR can be used to decrease noise in video streams. Temporal noise reducers (TNRs) can incorporate a classifier that determines which portions of video images can be averaged for temporal noise reduction, and which portions of video images cannot be averaged. In a static scene, each pixel in the captured image can be represented as a combination of the true pixel value (P) and the additive noise *(noise).* The relationship can be defined as follows:

$$P_{noisy\,x,y}\,[n]=P_{x,y}\,[n]+noise_{x,y}\,[n]$$

Here, $P_{noisy}$ represents the pixel as captured by the sensor, P represents the actual pixel value, and *noise* symbolizes the additional noise affecting each pixel. In general, noise reduction techniques identify noise that possesses characteristics such as a zero mean and the noise remains independent of time. Aggregating multiple such noisy pixels allows for an improved approximation of the clean pixel value at a TNR.

TNR generally includes two main steps: motion analysis and blending. Motion analysis includes identifying moving elements, and can include generating a dense motion map. Blending includes blending the current input image frame with the previous temporally-denoised frame. By performing weighted averaging of the noisy input and the temporal feedback information, TNR significantly reduces the noise level. In some examples, the motion analysis step includes generating a dense motion map, and the blending step is performed on an aligned image. That is, if the current image frame is shifted slightly from the previous frame, the corresponding pixels from the current image frame and the previous frame can be aligned using the dense motion map. In some examples, such as when there is no dense motion map, the blending step includes blending static pixels.

In general, TNRs receive as input the output from an imaging pipe. That is, the raw image data is fed into an imaging pipe, and the imaging pipe output is input to the TNR. According to various implementations, systems and methods are provided to improve the performance and IQ of a TNR using an architecture having that separates the motion analysis from the blending step. In particular, the architecture includes a motion analysis block that operates on the raw image at the start of the pipeline, while the blending operation is completed at the end of the processing pipeline.

A TNR classifier can be based on deep-learning (DL) techniques, and a DL-based TNR can be based on a deep neural network (DNN). The training process for a DNN usually has two phases: the forward pass and the backward pass. In general, DNNs include input training samples with ground-truth labels (e.g., known or verified labels). After the DNN is trained, the DNN can be used for various tasks through inference. Inference makes use of the forward pass to produce model-generated output for unlabeled real-world data.

For purposes of explanation, specific numbers, materials, and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A and/or B" or the phrase "A or B" means (A), (B), or (A and B). For the purposes of the present disclosure, the phrase "A, B, and/or C" or the phrase "A, B, or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value based on the input operand of a particular value as described herein or as known in the art. Similarly, terms indicating orientation of various elements, e.g., "coplanar," "perpendicular," "orthogonal," "parallel," or any other angle between the elements, generally refer to being within +/- 5-20% of a target value based on the input operand of a particular value as described herein or as known in the art.

In addition, the terms "comprise," "comprising," "include," "including," "have," "having" or any other variation thereof, are intended to cover a non-exclusive inclusion. For example, a method, process, device, or system that comprises a list of elements is not necessarily limited to only those elements but may include other elements not expressly listed or inherent to such method, process, device, or systems. Also, the term "or" refers to an inclusive "or" and not to an exclusive "or."

The systems, methods, and devices of this disclosure each have several innovative aspects, no single one of which is solely responsible for all desirable attributes disclosed herein. Details of one or more implementations of the subject matter described in this specification are set forth in the description below and the accompanying drawings.

### Example TNR System

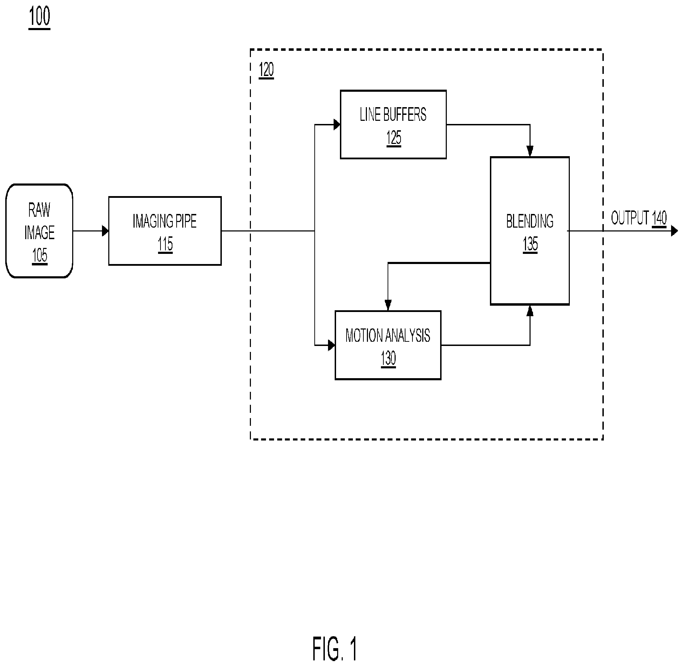

FIG. 1 is a block diagram of an example image processing system 100. The image processing system 100 includes an imaging pipe 115 and a TNR 120. A raw image 105 is received at the imaging pipe 115, and the output from the imaging pipe 115 is input to the TNR 120. The TNR 120 includes line buffers 125, a motion analysis block 130, and blending block 135. The TNR 120 performs noise reduction on the processing image output from the imaging pipe 115, and outputs a reduced noise image 140. In particular, the motion analysis block 130 performs motion analysis by matching the TNR input image with the temporally de-noised frame from the previous step. The line buffers 125 buffer the input and function to delay the input of the current frame while the motion analysis step at motion analysis block 130 is performed on the previous frame.

In general, when the TNR is positioned after the imaging pipe 115, it can be difficult to find an accurate noise model for identifying the moving parts. Additionally, the input image is a full-sized processed image, and, as shown in the image processing system 100, the TNR uses line buffers 125 to store incoming image pixels, introducing a latency into the image processing system 100. In some examples, the TNR 120 is positioned before the imaging pipe 115, and performs noise reduction on a full sized raw image, using significant resources. Furthermore, when the TNR 120 is positioned before the imaging pipe 115, an additional noise reduction step is included after the imaging pipe 115 to remove remaining noise.

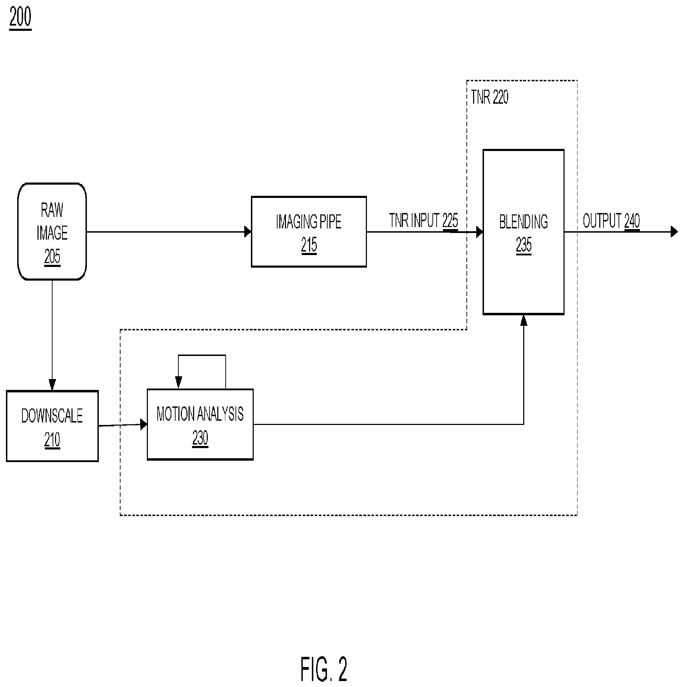

In some implementations, the motion analysis step of temporal noise reduction can be performed on a downscaled imaged, increasing TNR efficiency and performance. For example, the motion analysis can be performed on a low-quality, unprocessed, and downscaled image. The low-quality, unprocessed, and downscaled image can be generated directly from the raw image 105, or from close to the beginning of the imaging pipe 115. The output from the motion analysis block can then be applied at the blending module on the processed images from the imaging pipe. One example of this scheme is illustrated in FIG. 2.

FIG. 2 is a block diagram of an example image processing system 200 in accordance with various embodiments. The image processing system 200 includes a downscaling module 210, an imaging pipe 215, and a TNR 220. The TNR 220 includes a motion analysis block 230 and a blending module 235. The motion analysis block 230 and the blending module 235 are separated from each other, and the motion analysis block 230 uses the previous motion analysis output generated for a previous frame, in addition to the downscaled input image, to perform motion analysis rather than using a previously processed frame from the blending module 235. The downscaling module 210 receives the raw image 205 and generates a low-quality, unprocessed, and downscaled image for input to the motion analysis block 230. The motion analysis is performed close to the beginning of the image processing system 200, and the raw image 205 is also input to the imaging pipe 215 for processing. Thus, the imaging pipe 215 processes the raw image 205 in parallel with the downscaling module 210 and the motion analysis block 230, such that the output from the motion analysis block 230 can be input to the blending module 235 at about the same time as the TNR input 225 from the imaging pipe 215.

The motion analysis block 230 performs motion analysis on a downscaled raw image, and analysis of the raw image allows the motion analysis block to generate a very accurate, stable, and predictable noise model. In particular, the noise model of the sensor is generally stable and known. In contrast, when motion analysis is performed after image processing at an imaging pipe, the processing includes color and luma manipulations that change the image and make the noise model for the processed image difficult to determine. In some examples, the color and luma manipulations can include global and local tone mapping, gamma, WB and CCM, shading correction, and so on. In various examples, the motion analysis block 230 applies motion analysis on the unprocessed early-stage image based on the physical noise model. The physical noise model yields the variance of the measurement for each pixel. In some examples, the noise can be modeled as:

$$variance\ (noise) \cong a + bI$$

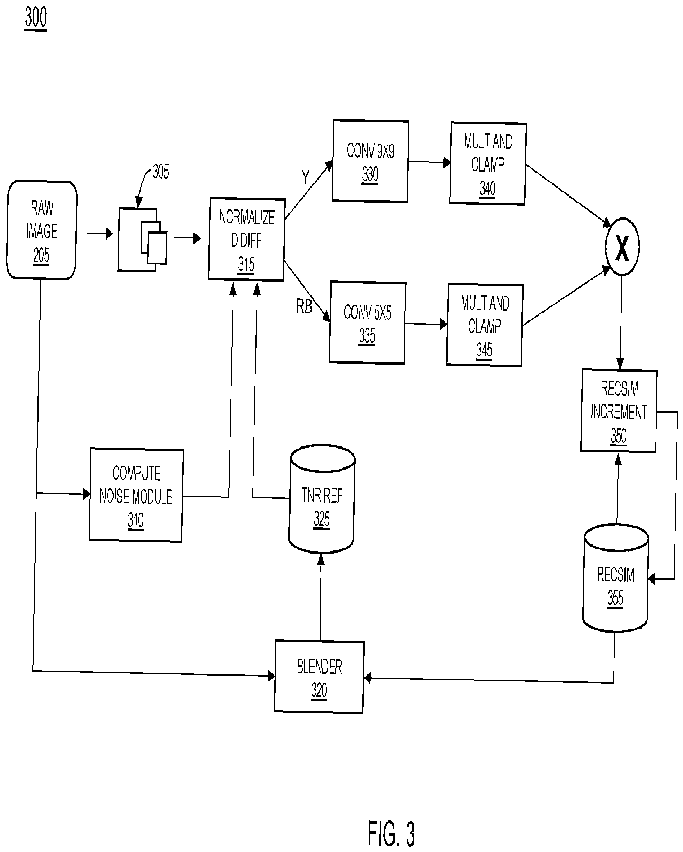

Where $I$ is the intensity of the pixel, and $a, b$ are functions of the analog gain (ISO). In various examples, the physical noise model is stable and predictable at the start of the imaging pipe. The motion analysis block 230 is discussed in greater detail with respect to FIG. 3.

In various examples, the blending module 235 performs the blending including blending the current input image frame (the TNR input 225) with the previous temporally-denoised frame (previous output frame 240). The blended image frame becomes the current output frame 240, and is also used for the subsequent blending step. Performing the blending step at the end of the sequence of image processing steps ensures that the noise reduction step is the final step of the processing pipeline, allowing for the elimination of residual noise. Additionally, performing the blending operation on the full resolution image after the imaging pipe 215, and storing the blended output image at the end of the image processing system 200 can reduce image storage sizes, as the final output image 240 is generally significantly smaller in size than the input raw image 205.

In some examples, a blend factor $\alpha$ can be used to generate the output frame 240. The blend factor can vary for different regions of the TNR input frame 225. In one example, a portion of the output 240 frame can be determined using the following equation:

$$out = (1 - \alpha)\ *\ in + \alpha\ *\ prev\_out$$

where $in$ is the TNR input frame 225 and $prev\_out$ is the previous output frame 240. In various examples, the blend factor $\alpha$ is determined based on the output from the motion analysis block 230. The blend factor $\alpha$ is content dependent, such that regions in the frame that are similar to the previous frame have a high blend factor $\alpha$. Similarly, regions in which the current frame is different from the previous frame will have a low blend factor $\alpha$. For example, a region that was occluded in a previous frame and is revealed in the current input frame, due to motion of an object, will have a blend factor $\alpha$ equal to about zero. Thus, in the equation above, "out" can be a portion of the output frame with the "in" and "prev_out" representing corresponding portions of the input frame and previous output frame. Note that TNRs can include additional features, such as motion compensation of the previous output to rectify it with the current view.

According to various implementations, the image processing system 200 is a lower cost image processing architecture than other image processing systems for temporal noise reduction, and image processing system 200 outputs improved motion analysis. Additionally, the location of the temporal blending module at the end of the image processing pipeline is an optimal location for the filter for maximum image quality, since noise is removed after processing. Thus, no additional or secondary noise filter is used.

*Example Motion Analysis Block*

FIG. 3 is a block diagram of an example motion analysis block 300, in accordance with various embodiments. A raw image 205 is input to the motion analysis block 300. In some examples, the raw image is an RGB image, and it can also be a different image format. The raw image 205 is downscaled to color components 305. In some examples, the color components are YRB color components, with the Y color components converting at a 1:4 ratio (1/4 of the raw image size), and each of the R and B color components converting at a 1:8 ration (1/8 of the raw image size). The color components 305 are input to a normalization block 315, and the color components 305 are also input to a compute noise module 310 and a blender 320. The compute noise module 310 determines the noise model for each pixel, and the noise is used to determine whether the pixels in the input frame match the pixels in the reference frame. The blender 320 determines a sum of differences (SAD) between the current frame color components 305 and the previous cleaned frame. The SAD can be stored in a TNR ref memory 325, before being input to the normalization block 315. The normalization block 315 normalizes the SAD values for the Y and RB components.

The normalized SAD values from the normalization block 315 for the Y color components are input the 9x9 convolution module 330 and to the mult and clamp module 340, where the static pixels and the moving pixels are identified. The 9x9 convolution module 330 smooths differences for determination of matching between the current frame and the reference frame. The mult and clamp module 340 is a decision function that determine whether pixels match. In one example, if the difference for corresponding pixels from the current frame and the reference frame is less than 0.2, it may be determined that the current frame pixels match the reference frame pixels, while if the difference is greater than or equal to 0.2, it may be determined that the current frame pixels do not match the reference frame pixels. In some examples, the mult and clamp module 340 can generate soft decisions that can be adjusted. The normalized SAD values from the normalization block 315 for the R and B color components are input the 5x5 conversion module 335 and to the mult and clamp module 345, where the static pixels and the moving pixels are identified. In particular, the moving pixels have large SAD values while the static pixels have small SAD values. The motion analyzed color components from the mult and clamp module 340 and the mult and clamp module 345 are combined and saved in a database 355, where they can be accessed by the blender 320 for the next image frame.

*Example Motion Analysis Maps*

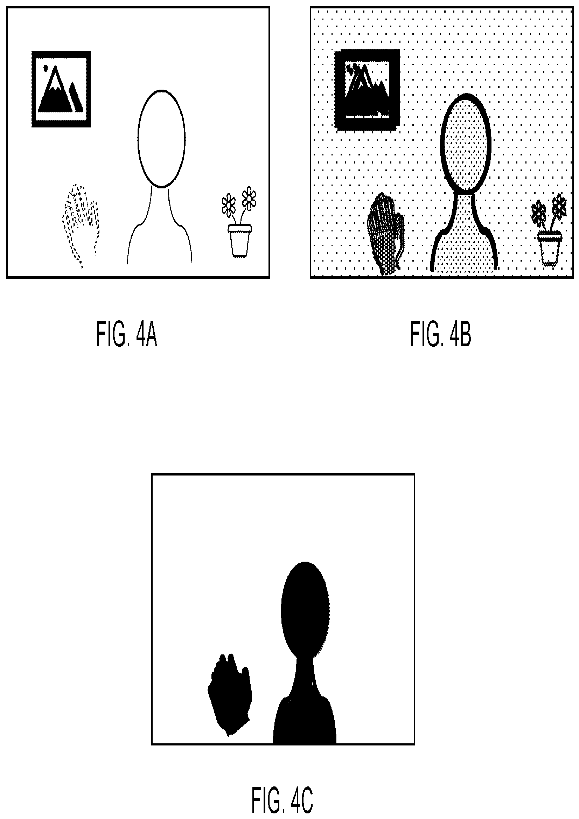

FIG. 4A shows a scene used for motion analysis, and FIGS. 4B-4C show motion analysis maps (also known as alpha maps or TNR blend maps), in accordance with various embodiments. In particular FIGS. 4B and 4C show motion analysis maps for the scene shown in FIG. 4A. FIG. 4B is an example of a motion analysis map in which the motion analysis is determined at the end of the image processing pipe, as shown, for example, in FIG. 1. FIG. 4C is an example of a motion analysis map in which the motion analysis is determined at the beginning of the image processing pipe, as shown, for example, in FIG. 2.

In the motion analysis maps, the black spots and lines are areas where the $\alpha$ has a low value (and thus areas where consecutive frames should not be averaged), while the white space is areas where $\alpha$ has a high value (areas that can be averaged). The $\alpha$ has a high value in static regions of the frame. The $\alpha$ has a low value where there are moving objects. The dark areas indicate movement between the frames used to generate FIGS. 4B and 4C. Bending is avoided in areas where there is movement or where the frames are dissimilar (where $\alpha \cong 0$). Thus, the area where the person's hand is waving has a low alpha value ($\alpha \cong 0$), as indicated by the large black spot in FIG. 4C, and dark areas around the person.

The motion analysis map of FIG. 4B identifies a stationary framed wall picture as well as a stationary flower pot as potentially having some moving pixels. In contrast, the the motion analysis map of FIG. 4C, generated using motion analysis determined at the beginning of the image processing pipe, is more accurate at identifying moving pixels as those pixels of the non-stationary object in the scene (the person).

*Example Method for Temporal Noise Reduction*

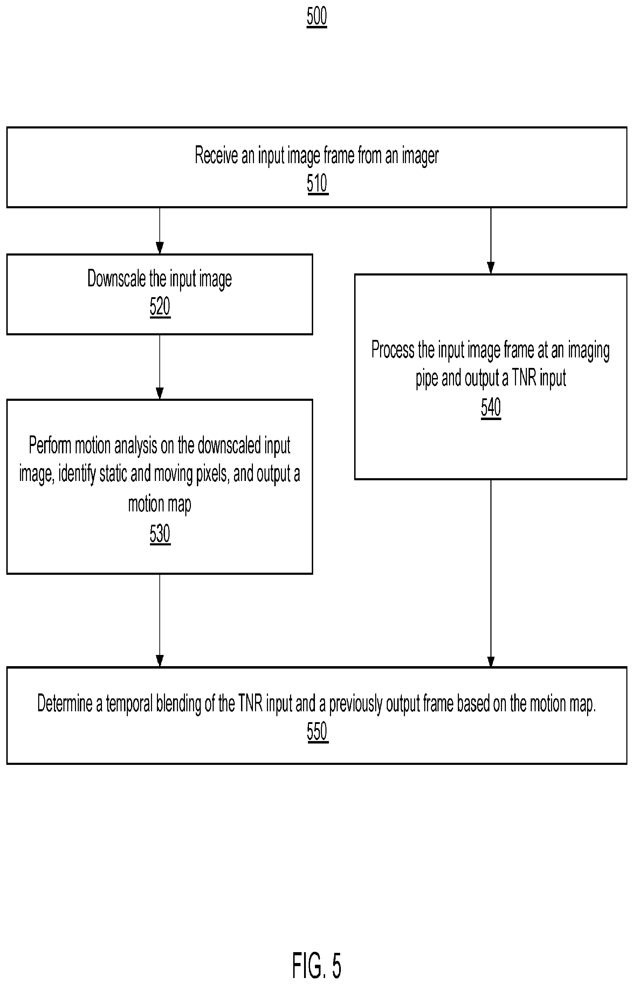

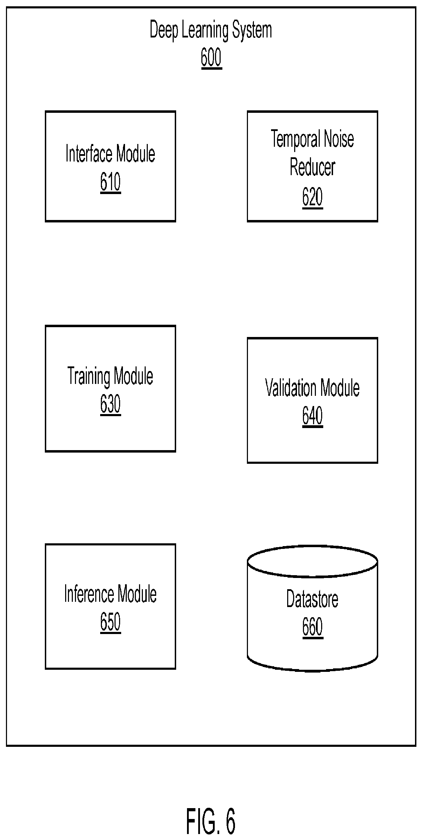

FIG. 5 is a flowchart showing a method 500 for temporal noise reduction of images, in accordance with various embodiments. The method 500 may be performed by the image processing system 200 of FIG. 2, and/or by the deep learning system 600 in FIG. 6. Although the method 500 is described with reference to the flowchart illustrated in FIG. 5, other methods for TNR may alternatively be used. For example, the order of execution of the steps in FIG. 5 may be changed. As another example, some of the steps may be changed, eliminated, or combined.

At step 510, an input image frame is received from an imager at an image processing system. The input image frame is a raw image and can be a frame of a video stream. The image processing system is configured to process the image with various image processing techniques such as color and luma manipulations (e.g., global tone mapping, local tone mapping, gamma, white balancing (WB), color correction matrices (CCM), shading correction, and so on). Additionally, the image processing system is configured to perform temporal noise reduction on the image frame.

At step 520, the input image frame is input to a downscaling module configured to downscale the input image frame and generate a current downscaled image. The downscaling module can also separate the input image frame into its various color components, and in some examples, the downscaling module can convert the input image frame to YRB color space. At step 530, the downscaled image is input to a motion analysis block, which performs motion analysis on the current downscaled image. In particular, the motion analysis block uses the previous downscaled image from the previous input image frame to identify pixels in the current downscaled image that are static and to identify pixels in the current downscaled image that are moving. In some examples, the motion analysis block removes noise from the current downscaled image using a clean previous downscaled image, where a clean image is an image that has been processed to remove noise. The motion analysis block can generate a motion map that maps the current downscaled image labeling each pixel as static or moving. In various examples, the motion map based on the downscaled image can be used to identify static and moving pixels in the full scale image at step 550.

At step 540, the input image frame from step 510 is input to an image processing pipe. The image processing pipe processes the image using the color and luma manipulation techniques described above to generate a processed TNR input image for input to the TNR. Step 540 occurs in parallel to steps 520 and 530. In some examples, the input image frame received at step 510 is simultaneously input to the downscaling module at step 520 and to the image processing pipe at step 540. In various examples, the outputs from step 530 and step 540 can be input to a blending module for step 550 at about the same time, and the outputs can be input to the blending module simultaneously.

At step 550, a blending module receives the motion map from step 530 and the processed TNR image from step 540. In various examples, the processed TNR image is a full size image, and the blending module performs noise reduction on the processed TNR image using the motion map. The blending module outputs a clean processed image for the current frame. In various examples, the blending module generates the clean processed image using a previous clean processed image from the previous frame. The blending module can retrieve one or more previous TNR output frames from a memory, where TNR output frames are clean processed images. In various examples, the previous TNR output frames are the most-recent TNR output frames.

Based on the motion map, the blending module blends the previous clean processed image with the processed TNR image to generate the clean processed image. Blending the images can include using a blend factor that can vary for different regions of the processed TNR image, and can vary for each pixel. The blend factor value is based on whether the corresponding pixel is identified, in the motion map, as static or moving. There is little to no blending of moving pixels as ghosting can result from blending non-corresponding image regions from the previous and current image frames.

*Example DNN System for TNR*

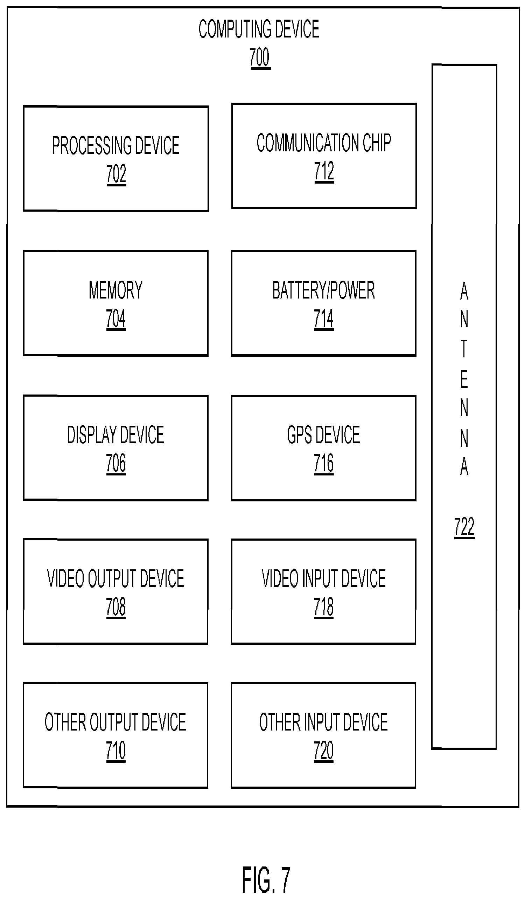

FIG. 6 is a block diagram of an example DNN system 600, in accordance with various embodiments. The DNN system 600 trains DNNs for various tasks, including temporal noise reduction of video streams. The DNN system 600 includes an interface module 610, a TNR 620, a training module 630, a validation module 640, an inference module 650, and a datastore 660. In other embodiments, alternative configurations, different or additional components may be included in the DNN system 600. Further, functionality attributed to a component of the DNN system 600 may be accomplished by a different component included in the DNN system 600 or a different system. The DNN system 600 or a component of the DNN system 600 (e.g., the training module 630 or inference module 650) may include the computing device 700 in FIG. 7.

The interface module 610 facilitates communications of the DNN system 600 with other systems. As an example, the interface module 610 supports the DNN system 600 to distribute trained DNNs to other systems, e.g., computing devices configured to apply DNNs to perform tasks. As another example, the interface module 610 establishes communications between the DNN system 600 with an external database to receive data that can be used to train DNNs or input into DNNs to perform tasks. In some embodiments, data received by the interface module 610 may have a data structure, such as a matrix. In some embodiments, data received by the interface module 610 may be an image, a series of images, and/or a video stream.

The temporal noise reducer (TNR) 620 performs temporal noise reduction on video images. In some examples, the TNR 620 performs temporal noise reduction on real-world videos. In general, the TNR includes a motion analysis block and a blending module. The TNR reviews the input data, identifies moving objects at the motion analysis block, and determines which portions of a video image can be merged (or blended) at the blending module, and which portions of a video image cannot be merged. In general, portions of a video image with moving objects cannot be blended. In some examples, the input to a TNR is a current input frame and a previous output frame, where a previous output frame is a blend of multiple previous input frames. During training, the TNR 620 can use both past and future video images. In general, the frames of a video feed have a sequence in which the frames were captured, and the sequence can be considered sequentially (from older frames to newer frames) in time-forward order.

The training module 630 trains DNNs by using training datasets. In some embodiments, a training dataset for training a DNN may include one or more images and/or videos, each of which may be a training sample. In some examples, the training module 630 trains the TNR 620. The training module 630 may receive real-world video data for processing with the temporal noise reducer 620 as described herein. In some embodiments, the training module 630 may input different data into different layers of the DNN. For every subsequent DNN layer, the input data may be less than the previous DNN layer. The training module 630 may adjust internal parameters of the DNN to minimize a difference between the video processed by the DNN with time-forward temporal noise reduction at the TNR 620 and the video processed by the DNN with time-reversal temporal noise reduction at the TNR 620. In some examples, the TNR 620 can be trained with labeled ground truth images. In some examples, the difference between TNR 620 output frames and the corresponding groundtruth images can be measured as the number of pixels in the corresponding image frames that are different from each other. In some examples, the difference between corresponding image frames can be measured using a loss function.

In some embodiments, a part of the training dataset may be used to initially train the DNN, and the rest of the training dataset may be held back as a validation subset used by the validation module 640 to validate performance of a trained DNN. The portion of the training dataset not including the tuning subset and the validation subset may be used to train the DNN.

The training module 630 also determines hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the DNN. An epoch may include one or more batches. The number of epochs may be 1, 10, 50, 100, or even larger.

The training module 630 defines the architecture of the DNN, e.g., based on some of the hyperparameters. The architecture of the DNN includes an input layer, an output layer, and a plurality of hidden layers. The input layer of an DNN may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as pooling layers, fully connected layers, normalization layers, softmax or logistic layers, and so on. The convolutional layers of the DNN abstract the input image to a feature map that is represented by a tensor specifying the feature map height, the feature map width, and the feature map channels (e.g., red, green, blue images include 3 channels). A pooling layer is used to reduce the spatial volume of input image after convolution. It is used between 2 convolution layers. A fully connected layer involves weights, biases, and neurons. It connects neurons in one layer to neurons in another layer. It is used to classify images between different categories by training.

In the process of defining the architecture of the DNN, the training module 630 also adds an activation function to a hidden layer or the output layer. An activation function of a layer transforms the weighted sum of the input of the layer to an output of the layer. The activation function may be, for example, a rectified linear unit activation function, a tangent activation function, or other types of activation functions.

After the training module 630 defines the architecture of the DNN, the training module 630 inputs a training dataset into the DNN. The training dataset includes a plurality of training samples. An example of a training dataset includes a series of images of a video stream. Unlabeled, real-world video is input to the TNR, and processed using the TNR parameters of the DNN to produce two different model-generated outputs: a first time-forward model-generated output and a second time-reversed model-generated output. In the backward pass, the training module 630 modifies the parameters inside the DNN ("internal parameters of the DNN") to minimize the differences between the first model-generated output is and the second model generated output. The internal parameters include weights of filters in the convolutional layers of the DNN. In some embodiments, the training module 630 uses a cost function to minimize the differences.

The training module 630 may train the DNN for a predetermined number of epochs. The number of epochs is a hyperparameter that defines the number of times that the deep learning algorithm will work through the entire training dataset. One epoch means that each sample in the training dataset has had an opportunity to update internal parameters of the DNN. After the training module 630 finishes the predetermined number of epochs, the training module 630 may stop updating the parameters in the DNN. The DNN having the updated parameters is referred to as a trained DNN.

The validation module 640 verifies accuracy of trained DNNs. In some embodiments, the validation module 640 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the validation module 640 may determine an accuracy score measuring the precision, recall, or a combination of precision and recall of the DNN. The validation module 640 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 * PR / (P + R)) unifies precision and recall into a single measure.

The validation module 640 may compare the accuracy score with a threshold score. In an example where the validation module 640 determines that the accuracy score of the augmented model is lower than the threshold score, the validation module 640 instructs the training module 630 to re-train the DNN. In one embodiment, the training module 630 may iteratively re-train the DNN until the occurrence of a stopping condition, such as the accuracy measurement indication that the DNN may be sufficiently accurate, or a number of training rounds having taken place.

The inference module 650 applies the trained or validated DNN to perform tasks. The inference module 650 may run inference processes of a trained or validated DNN. In some examples, inference makes use of the forward pass to produce model-generated output for unlabeled real-world data. For instance, the inference module 650 may input real-world data into the DNN and receive an output of the DNN. The output of the DNN may provide a solution to the task for which the DNN is trained for.

The inference module 650 may aggregate the outputs of the DNN to generate a final result of the inference process. In some embodiments, the inference module 650 may distribute the DNN to other systems, e.g., computing devices in communication with the DNN system 600, for the other systems to apply the DNN to perform the tasks. The distribution of the DNN may be done through the interface module 610. In some embodiments, the DNN system 600 may be implemented in a server, such as a cloud server, an edge service, and so on. The computing devices may be connected to the DNN system 600 through a network. Examples of the computing devices include edge devices.

The datastore 660 stores data received, generated, used, or otherwise associated with the DNN system 600. For example, the datastore 660 stores video processed by the TNR 620 or used by the training module 630, validation module 640, and the inference module 650. The datastore 660 may also store other data generated by the training module 630 and validation module 640, such as the hyperparameters for training DNNs, internal parameters of trained DNNs (e.g., values of tunable parameters of activation functions, such as Fractional Adaptive Linear Units (FALUs)), etc. In the embodiment of FIG. 6, the datastore 660 is a component of the DNN system 600. In other embodiments, the datastore 660 may be external to the DNN system 600 and communicate with the DNN system 600 through a network.

In general, an uncalibrated or badly calibrated TNR would fail to discriminate between similar and dissimilar regions in the frames of the current input and the previous output. Similarly, an uncalibrated or badly calibrated TNR would fail to discriminate between similar and dissimilar regions in the frames of FIGS. 4A and 4B. When a moving object is blended with the background, a ghost artifact appears in the output frame (i.e., in the output video). In particular, a ghost artifact appears when pixels of the moving foreground object are blended with the background pixels, making the moving object appear transparent. When the current input is blended with the previous output, the ghost artifact trails behind the moving object.

For TNR training, the input can include an input image frame and a labeled groundtruth TNR-processed image. In various examples, the input image frame is received at a temporal noise reducer such as the TNR of image processing systems 100, 200, or the TNR 620. In other examples, the input image frame can be received at the training module 630 or the inference module 650 of FIG. 6. The imager can be a camera, such as a video camera. The input image frame can be a still image from the video camera feed. The input image frame can include a matrix of pixels, each pixel having a color, lightness, and/or other parameter. The input image frame can be downscaled and processed by the motion analysis block, and the input image frame can be simultaneously processed (in parallel) by an image processing pipe. The output from the motion analysis block and the output from the image processing pipe can be input to a blending module, which can also retrieve previous output image from a memory. The blending module can remove noise from the processed input image and generate a clean output image. Temporal noise reduction parameters, such as blend factors, are adjusted to minimize a loss function between the clean output image and the labeled groundtruth TNR-processed image. Various steps can be repeated to further adjust the TNR parameters. In some examples, the training can be repeated with a new input image frame and groundtruth TNR-processed image. In some examples, the motion analysis block can be trained using downscaled input images and comparing motion analysis block motion map outputs to groundtruth motion maps. Similarly, in some examples, the blending module can be trained using processed TNR input images and downscaled motion maps, and comparing blending module clean processed output images to groundtruth clean processed output images.

*Example Computing Device*

FIG. 7 is a block diagram of an example computing device 700, in accordance with various embodiments. In some embodiments, the computing device 700 may be used for at least part of the deep learning system 600 in FIG. 6. A number of components are illustrated in FIG. 7 as included in the computing device 700, but any one or more of these components may be omitted or duplicated, as suitable for the application. In some embodiments, some or all of the components included in the computing device 700 may be attached to one or more motherboards. In some embodiments, some or all of these components are fabricated onto a single system on a chip (SoC) die. Additionally, in various embodiments, the computing device 700 may not include one or more of the components illustrated in FIG. 7, but the computing device 700 may include interface circuitry for coupling to the one or more components. For example, the computing device 700 may not include a display device 706, but may include display device interface circuitry (e.g., a connector and driver circuitry) to which a display device 706 may be coupled. In another set of examples, the computing device 700 may not include a video input device 718 or a video output device 708, but may include video input or output device interface circuitry (e.g., connectors and supporting circuitry) to which a video input device 718 or video output device 708 may be coupled.

The computing device 700 may include a processing device 702 (e.g., one or more processing devices). The processing device 702 processes electronic data from registers and/or memory to transform that electronic data into other electronic data that may be stored in registers and/or memory. The computing device 700 may include a memory 704, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 704 may include memory that shares a die with the processing device 702. In some embodiments, the memory 704 includes one or more non-transitory computer-readable media storing instructions executable for occupancy mapping or collision detection, e.g., the method 500 described above in conjunction with FIG. 5 or some operations performed by the DNN system 600 in FIG. 6. The instructions stored in the one or more non-transitory computer-readable media may be executed by the processing device 702.

In some embodiments, the computing device 700 may include a communication chip 712 (e.g., one or more communication chips). For example, the communication chip 712 may be configured for managing wireless communications for the transfer of data to and from the computing device 700. The term "wireless" and its derivatives may be used to describe circuits, devices, systems, methods, techniques, communications channels, etc., that may communicate data using modulated electromagnetic radiation through a nonsolid medium. The term does not imply that the associated devices do not contain any wires, although in some embodiments they might not.

The communication chip 712 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 712 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 712 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 712 may operate in accordance with code-division multiple access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 712 may operate in accordance with other wireless protocols in other embodiments. The computing device 700 may include an antenna 722 to facilitate wireless communications and/or to receive other wireless communications (such as AM or FM radio transmissions).

In some embodiments, the communication chip 712 may manage wired communications, such as electrical, optical, or any other suitable communication protocols (e.g., the Ethernet). As noted above, the communication chip 712 may include multiple communication chips. For instance, a first communication chip 712 may be dedicated to shorter-range wireless communications such as Wi-Fi or Bluetooth, and a second communication chip 712 may be dedicated to longer-range wireless communications such as global positioning system (GPS), EDGE, GPRS, CDMA, WiMAX, LTE, EV-DO, or others. In some embodiments, a first communication chip 712 may be dedicated to wireless communications, and a second communication chip 712 may be dedicated to wired communications.

The computing device 700 may include battery/power circuitry 714. The battery/power circuitry 714 may include one or more energy storage devices (e.g., batteries or capacitors) and/or circuitry for coupling components of the computing device 700 to an energy source separate from the computing device 700 (e.g., AC line power).

The computing device 700 may include a display device 706 (or corresponding interface circuitry, as discussed above). The display device 706 may include any visual indicators, such as a heads-up display, a computer monitor, a projector, a touchscreen display, a liquid crystal display (LCD), a light-emitting diode display, or a flat panel display, for example.

The computing device 700 may include a video output device 708 (or corresponding interface circuitry, as discussed above). The video output device 708 may include any device that generates an audible indicator, such as speakers, headsets, or earbuds, for example.

The computing device 700 may include a video input device 718 (or corresponding interface circuitry, as discussed above). The video input device 718 may include any device that generates a signal representative of a sound, such as microphones, microphone arrays, or digital instruments (e.g., instruments having a musical instrument digital interface (MIDI) output).

The computing device 700 may include a GPS device 716 (or corresponding interface circuitry, as discussed above). The GPS device 716 may be in communication with a satellite-based system and may receive a location of the computing device 700, as known in the art.

The computing device 700 may include another output device 710 (or corresponding interface circuitry, as discussed above). Examples of the other output device 710 may include a video codec, a video codec, a printer, a wired or wireless transmitter for providing information to other devices, or an additional storage device.

The computing device 700 may include another input device 720 (or corresponding interface circuitry, as discussed above). Examples of the other input device 720 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 700 may have any desired form factor, such as a handheld or mobile computer system (e.g., a cell phone, a smart phone, a mobile internet device, a music player, a tablet computer, a laptop computer, a netbook computer, an ultrabook computer, a personal digital assistant (PDA), an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 700 may be any other electronic device that processes data.

_Selected Examples_

The following paragraphs provide various examples of the embodiments disclosed herein.

Example 1 provides a computer-implemented method, including receiving an input frame of a video stream from an imager, where the input frame is a raw image; processing the input frame at an imaging pipe and generating a temporal noise reducer input image; generating a downscaled raw image from the input frame; performing motion analysis on the downscaled raw image to generate a motion map, where the motion map identifies first regions of the input frame that include movement and second regions of the input frame that are static; and determining, based on the motion map, a temporal blending of the temporal noise reducer input image and a previous output frame to generate a clean output image.

Example 2 provides the computer-implemented method of example 1, where the downscaled image is a current downscaled image frame and where performing the motion analysis includes comparing the current downscaled image frame to a previous downscaled image frame to identify the first areas of the input frame that include movement.

Example 3 provides the computer-implemented method of example 2, further including performing temporal blending on the previous downscaled image frame to generate a clean previous downscaled image frame, and where comparing the current downscaled image frame to the previous downscaled image frame includes comparing the current downscaled image frame to the clean previous downscaled image frame.

Example 4 provides the computer-implemented method of example 2, where performing motion analysis further includes performing motion compensation including, for current pixels in the in the current downscaled image frame, identifying corresponding previous pixels in the previous downscaled image frame, and determining where the previous pixels moved to in the current downscaled image frame.

Example 5 provides the computer-implemented method of example 1, where processing the input frame at the imaging pipe includes processing the input frame in parallel with performing the motion analysis.

Example 6 provides the computer-implemented method of example 5, further including inputting the temporal noise reducer input image and the motion map to a blending module simultaneously, where the blending module determines the temporal blending.

Example 7 provides the computer-implemented method of example 1, where processing the input frame at the imaging pipe includes at least one of color manipulations and luma manipulations.

Example 8 provides the computer-implemented method of example 1, where determining the temporal blending includes determining a blend factor value for each of a plurality of regions of the temporal noise reducer input image, where the plurality of regions include the first and second regions, and where determining the blend factor value includes determining a low blend factor value for respective first regions, and determining a high blend factor value for respective second regions.

Example 9 provides one or more non-transitory computer-readable media storing instructions executable to perform operations, the operations including receiving an input frame of a video stream from an imager, where the input frame is a raw image; processing the input frame at an imaging pipe and generating a temporal noise reducer input image; generating a downscaled raw image from the input frame; performing motion analysis on the downscaled raw image to generate a motion map, where the motion map identifies first regions of the input frame that include movement and second regions of the input frame that are static; and determining, based on the motion map, a temporal blending of the temporal noise reducer input image and a previous output frame to generate a clean output image.

Example 10 provides the one or more non-transitory computer-readable media of example 9, where the downscaled image is a current downscaled image frame and where performing the motion analysis includes comparing the current downscaled image frame to a previous downscaled image frame to identify the first areas of the input frame that include movement.

Example 11 provides the one or more non-transitory computer-readable media of example 10, the operations further including performing temporal blending on the previous downscaled image frame to generate a clean previous downscaled image frame, and where comparing the current downscaled image frame to the previous downscaled image frame includes comparing the current downscaled image frame to the clean previous downscaled image frame.

Example 12 provides the one or more non-transitory computer-readable media of example 10, where performing motion analysis further includes performing motion compensation including identifying previous pixels in the previous downscaled image frame that correspond with current pixels in the in the current downscaled image frame, and determining where the previous pixels moved to in the current downscaled image frame.

Example 13 provides the one or more non-transitory computer-readable media of example 9, where processing the input frame at the imaging pipe includes processing the input frame in parallel with performing the motion analysis.

Example 14 provides the one or more non-transitory computer-readable media of example 13, the operations further including inputting the temporal noise reducer input image and the motion map to a blending module simultaneously, where the blending module determines the temporal blending.

Example 15 provides the one or more non-transitory computer-readable media of example 9, where processing the input frame at the imaging pipe includes at least one of color manipulations and luma manipulations.

Example 16 provides an apparatus, including a computer processor for executing computer program instructions; and a non-transitory computer-readable memory storing computer program instructions executable by the computer processor to perform operations including receiving an input frame of a video stream from an imager, where the input frame is a raw image; processing the input frame at an imaging pipe and generating a temporal noise reducer input image; generating a downscaled raw image from the input frame; performing motion analysis on the downscaled raw image to generate a motion map, where the motion map identifies first regions of the input frame that include movement and second regions of the input frame that are static; and determining, based on the motion map, a temporal blending of the temporal noise reducer input image and a previous output frame to generate a clean output image.

Example 17 provides the apparatus of example 16, where the downscaled image is a current downscaled image frame and where performing the motion analysis includes comparing the current downscaled image frame to a previous downscaled image frame to identify the first areas of the input frame that include movement.

Example 18 provides the apparatus of example 17, where the operations further include performing temporal blending on the previous downscaled image frame to generate a clean previous downscaled image frame, and where comparing the current downscaled image frame to the previous downscaled image frame includes comparing the current downscaled image frame to the clean previous downscaled image frame.

Example 19 provides the apparatus of example 10, where performing motion analysis further includes performing motion compensation including identifying previous pixels in the previous downscaled image frame that correspond with current pixels in the in the current downscaled image frame, and determining where the previous pixels moved to in the current downscaled image frame.

Example 20 provides the apparatus of example 16, where processing the input frame at the imaging pipe includes processing the input frame in parallel with performing the motion analysis.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

## Claims

1. A computer-implemented method, comprising:

   receiving an input frame of a video stream from an imager, wherein the input frame is a raw image;
   processing the input frame at an imaging pipe and generating a temporal noise reducer input image;
   generating a downscaled raw image from the input frame;
   performing motion analysis on the downscaled raw image to generate a motion map, wherein the motion map identifies first regions of the input frame that include movement and second regions of the input frame that are static; and
   determining, based on the motion map, a temporal blending of the temporal noise reducer input image and a previous output frame to generate a clean output image.

2. The computer-implemented method of claim 1, wherein the downscaled image is a current downscaled image frame and wherein performing the motion analysis includes comparing the current downscaled image frame to a previous downscaled image frame to identify the first regions of the input frame that include movement.

3. The computer-implemented method of claim 2, further comprising performing temporal blending on the previous downscaled image frame to generate a clean previous downscaled image frame, and wherein comparing the current downscaled image frame to the previous downscaled image frame includes comparing the current downscaled image frame to the clean previous downscaled image frame.

4. The computer-implemented method of claim 2, wherein performing motion analysis further comprises performing motion compensation including, for current pixels in the current downscaled image frame, identifying corresponding previous pixels in the previous downscaled image frame, and determining where the corresponding previous pixels moved to in the current downscaled image frame.

5. The computer-implemented method of claims 1-4, wherein processing the input frame at the imaging pipe includes processing the input frame in parallel with performing the motion analysis.

6. The computer-implemented method of claim 5, further comprising inputting the temporal noise reducer input image and the motion map to a blending module simultaneously, wherein the blending module determines the temporal blending.

7. The computer-implemented method of claims 1-4, wherein processing the input frame at the imaging pipe includes at least one of color manipulations and luma manipulations.

8. The computer-implemented method of claims 1-4, wherein determining the temporal blending includes determining a blend factor value for each of a plurality of regions of the temporal noise reducer input image, wherein the plurality of regions include the first and second regions, and wherein determining the blend factor value includes:

   determining a low blend factor value for respective first regions, and
   determining a high blend factor value for respective second regions.

9. One or more non-transitory computer-readable media storing instructions executable to perform operations, the operations comprising:

   receiving an input frame of a video stream from an imager, wherein the input frame is a raw image;
   processing the input frame at an imaging pipe and generating a temporal noise reducer input image;
   generating a downscaled raw image from the input frame;
   performing motion analysis on the downscaled raw image to generate a motion map, wherein the motion map identifies first regions of the input frame that include movement and second regions of the input frame that are static; and
   determining, based on the motion map, a temporal blending of the temporal noise reducer input image and a previous output frame to generate a clean output image.

10. The one or more non-transitory computer-readable media of claim 9, wherein the downscaled image is a current downscaled image frame and wherein performing the motion analysis includes comparing the current downscaled image frame to a previous downscaled image frame to identify the first regions of the input frame that include movement.

11. The one or more non-transitory computer-readable media of claim 10, the operations further comprising performing temporal blending on the previous downscaled image frame to generate a clean previous downscaled image frame, and wherein comparing the current downscaled image frame to the previous downscaled image frame includes comparing the current downscaled image frame to the clean previous downscaled image frame.

12. The one or more non-transitory computer-readable media of claim 10, wherein performing motion analysis further comprises performing motion compensation including identifying previous pixels in the previous downscaled image frame that correspond with current pixels in the in the current downscaled image frame, and determining where the previous pixels moved to in the current downscaled image frame.

13. An apparatus, comprising:

   a computer processor for executing computer program instructions; and
   a non-transitory computer-readable memory storing computer program instructions executable by the computer processor to perform operations comprising:

      receiving an input frame of a video stream from an imager, wherein the input frame is a raw image;
      processing the input frame at an imaging pipe and generating a temporal noise reducer input image;
      generating a downscaled raw image from the input frame;
      performing motion analysis on the downscaled raw image to generate a motion map, wherein the motion map identifies first regions of the input frame that include movement and second regions of the input frame that are static; and
      determining, based on the motion map, a temporal blending of the temporal noise reducer input image and a previous output frame to generate a clean output image.

14. The apparatus of claim 13, wherein the downscaled image is a current downscaled image frame and wherein performing the motion analysis includes comparing the current downscaled image frame to a previous downscaled image frame to identify the first regions of the input frame that include movement.

15. The apparatus of claim 14, wherein the operations further comprise performing temporal blending on the previous downscaled image frame to generate a clean previous downscaled image frame, and wherein comparing the current downscaled image frame to the previous downscaled image frame includes comparing the current downscaled image frame to the clean previous downscaled image frame.

<u>100</u>

FIG. 1

200

TNR 220

RAW IMAGE 205 → IMAGING PIPE 215 → TNR INPUT 225 → BLENDING 235 → OUTPUT 240

DOWNSCALE 210 → MOTION ANALYSIS 230

FIG. 2

300

FIG. 3

FIG. 4A

FIG. 4B

FIG. 4C

500

Receive an input image frame from an imager
510

Downscale the input image
520

Process the input image frame at an imaging pipe and output a TNR input
540

Perform motion analysis on the downscaled input image, identify static and moving pixels, and output a motion map
530

Determine a temporal blending of the TNR input and a previously output frame based on the motion map.
550

FIG. 5

FIG. 6

COMPUTING DEVICE
700

| | |
|---|---|
| PROCESSING DEVICE 702 | COMMUNICATION CHIP 712 |
| MEMORY 704 | BATTERY/POWER 714 |
| DISPLAY DEVICE 706 | GPS DEVICE 716 |
| VIDEO OUTPUT DEVICE 708 | VIDEO INPUT DEVICE 718 |
| OTHER OUTPUT DEVICE 710 | OTHER INPUT DEVICE 720 |

ANTENNA

722

FIG. 7

**EP 4 651 070 A1**

Europäisches Patentamt
European Patent Office
Office européen des brevets

# EUROPEAN SEARCH REPORT

Application Number

EP 25 16 7614

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 821 578 B2 (MARVELL WORLD TRADE LTD [BB]) 26 October 2010 (2010-10-26) <br> * column 2, last paragraph - column 3, paragraph 2; figures 1-2, 7 * <br> * column 4, lines 37-59 * <br> * column 5, penultimate paragraph - column 6, paragraph 1 * <br> * column 9, lines 48-57 * <br> * column 7, paragraph 1-4 * <br> ----- | 1-15 | INV.<br>G06T5/50 |
| A | BOSCO A ET AL: "Temporal noise reduction of Bayer matrixed video data", PROCEEDINGS / 2002 IEEE INTERNATIONAL CONFERENCE ON MULTIMEDIA AND EXPO : AUGUST 26 - 29, 2002, SWISS FEDERAL INSTITUTE OF TECHNOLOGY, LAUSANNE, SWITZERLAND, IEEE OPERATIONS CENTER, PISCATAWAY, NJ, vol. 1, 26 August 2002 (2002-08-26), pages 681-684, XP010604460, ISBN: 978-0-7803-7304-4 <br> * the whole document * <br> ----- | 1-15 | |

| | | | TECHNICAL FIELDS SEARCHED (IPC) |
|---|---|---|---|
| | | | G06T |

The present search report has been drawn up for all claims

| Place of search | Date of completion of the search | Examiner |
|---|---|---|
| Munich | 20 June 2025 | Kollreider, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

21

## ANNEX TO THE EUROPEAN SEARCH REPORT
## ON EUROPEAN PATENT APPLICATION NO.

EP 25 16 7614

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2025

| Patent document cited in search report | | Publication date | Patent family member(s) | | Publication date |
|---|---|---|---|---|---|
| US 7821578 | B2 | 26-10-2010 | CN | 101427560 A | 06-05-2009 |
| | | | EP | 2011328 A2 | 07-01-2009 |
| | | | JP | 5186712 B2 | 24-04-2013 |
| | | | JP | 2009533898 A | 17-09-2009 |
| | | | KR | 20090005163 A | 12-01-2009 |
| | | | US | 2007236609 A1 | 11-10-2007 |
| | | | WO | 2007117623 A2 | 18-10-2007 |

EPO FORM P0459

For more details about this annex : see Official Journal of the European Patent Office, No. 12/82